# EUROPÄISCHE PATENTSCHRIFT

(11) **EP 2 041 699 B1**
(45) Veröffentlichungstag und Bekanntmachung des Hinweises auf die Patenterteilung: **30.10.2013**
(21) Anmeldenummer: 07787119.2
(22) Anmeldetag: 05.07.2007
(51) Int. Cl.: G06K 13/08

(54) **KARTENAUFNAHMEVORRICHTUNG**
DEVICE FOR RECEIVING A CARD
DISPOSITIF D'INSERTION DE CARTE

(30) Priorität: 10.07.2006 DE 102006031880
(43) Veröffentlichungstag der Anmeldung: 01.04.2009
(73) Patentinhaber: Continental Automotive GmbH, 30165 Hannover (DE)
(72) Erfinder: TRAMPERT, Harald, 78054 Villingen-Schwenningen (DE); WAHLER, Torsten, 78073 Bad Dürrheim (DE)
(86) Internationale Anmeldenummer: PCT/EP2007/056829
(87) Internationale Veröffentlichungsnummer: WO 2008/006769

(56) Entgegenhaltungen:
- EP-A- 0 281 728
- DE-A1- 10 321 242
- US-A- 5 300 763

## Beschreibung

Die Erfindung bezieht sich auf eine Kartenaufnahmevorrichtung insbesondere für einen Fahrtenschreiber in einem Kraftfahrzeug, mit einem Gehäuse, das eine horizontale, spaltartige Aufnahmeöffnung zum Einführen einer Karte, insbesondere einer Chipkarte in einen Aufnahmespalt im Inneren der Kartenaufnahmevorrichtung aufweist, sowie mit einem Verschluss zum Verschließen der Aufnahmeöffnung, wobei der Verschluss ein Verschlusselement mit einer Dichtung aufweist, das sich in Längsrichtung der Aufnahmeöffnung erstreckt und entgegen einer Federkraft aus einer die Aufnahmeöffnung abdeckenden Schließposition rechtwinklig zur Ebene des Aufnahmespalts in eine die Aufnahmeöffnung freigebende Freigabeposition bewegbar ist.

Bei einer derartigen Kartenaufnahmevorrichtung ist es bekannt, die obere Wand des Aufnahmespalts starr und die untere Wand des Aufnahmespalts als sich in Einführrichtung erstreckenden Federarm auszubilden. Das eine Ende des Federarms trägt eine Dichtung, die von dem Federarm gegen die obere Wand des Aufnahmespalts vorgespannt ist und zwischen sich und der oberen Wand des Aufnahmespalts die Aufnahmeöffnung bildet.

Diese Aufnahmeöffnung wird bei einem Einführen der Karte durch entsprechendes nach unten Schwenken des Federarms geöffnet.

Die große Länge des in das Innere des Gehäuses der Kartenaufnahmevorrichtung ragenden Federarms erfordert eine große Bautiefe dieses Geräts.

Weiterhin muss die Vorspannkraft, mit der der Federarm die Dichtung in Schließrichtung beaufschlagt, hoch sein, da nicht nur ein Schließen der Aufnahmeöffnung sichergestellt, sondern auch noch das Gewicht von Dichtung und Federarm angehoben werden muss.

Aus der DE 103 21 242 A1 ist eine Kartenaufnahmevorrichtung der eingangs genannten Art bekannt. Dabei ist das Verschlusselement mittels eines elastischen Elements, insbesondere mittels einer Blattfeder federnd an der Kartenaufnahmevorrichtung gelagert und aus der Schließposition in die Freigabeposition absenkbar.

Aus der US-A-5,300,763 ist eine Kartenaufnahmevorrichtung bekannt, bei der ein Verschlusselement in einer Führung des Gehäuses aus einer Schließposition in eine Freigabeposition anhebbar geführt ist.

Aus der EP-A-0 281 728 ist eine Kartenaufnahmevorrichtung mit einem fest angeordneten Verschluss einer Aufnahmeöffnung bekannt, der aus einer Dichtung mit einem elastisch sich öffnenden Durchführschlitz besteht.

Aufgabe der Erfindung ist es daher, eine Kartenaufnahmevorrichtung der eingangs genannten Art zu schaffen, die bei einfachem Aufbau ein geringes Bauraumerfordernis benötigt und ein Eindringen von Verunreinigungen in das Innere der Kartenaufnahmevorrichtung vermeidet.

Diese Aufgabe wird erfindungsgemäß dadurch gelöst, dass das Verschlusselement in einer Führung des Gehäuses rechtwinklig zur Ebene des Aufnahmespalts aus der Schließposition in die Freigabeposition anhebbar geführt ist und mit einer sich über die Länge der Aufnahmeöffnung erstreckenden Dichtlippe aus einem elastischen Kunststoff versehen ist, die in der Schließposition an der unteren Spaltwand des Aufnahmespaltes in Anlage ist, wobei das Verschlusselement an seinen seitlichen Enden einander entgegengesetzt hervorstehende Führungsansätze aufweist, die in rechtwinklig zur Ebene des Aufnahmespalts sich erstreckende Führungsnuten des Gehäuses hineinragen.

Damit ist der Bereich des Verschlusses kompakt ausgebildet und benötigt nur einen geringen Bauraum, wobei das Verschlusselement einfach und sicher geführt ist.

Dies auch deshalb, da die erforderliche Federkraft zum sicheren Schließen des Verschlusses gering ausgelegt werden kann.

Die Dichtlippe aus einem elastischen Kunststoff ermöglicht ein gutes Trennen von Schmutz und Feuchtigkeit von der Karte, so dass derartige Verunreinigungen nicht in die Kartenaufnahmevorrichtung gelangen. Dies auch bei nicht eingeführter oder teileingeführter Karte in die Kartenaufnahmevorrichtung.

Das Verschlusselement ist vorzugsweise von einer Feder in die Schließposition beaufschlagt, die mit ihrem einen Ende an dem Gehäuse abgestützt und mit ihrem anderen Ende an der der Dichtlippe abgewandten Seite des Verschlusselements mit Vorspannung in Anlage ist.

Die Feder kann eine Schraubendruckfeder sein.
Ein besonders flacher Aufbau wird erreicht, wenn die Feder ein Federarm, insbesondere eine Blattfeder ist, der mit seinem einen Endbereich an dem Gehäuse befestigt und mit seinem anderen Endbereich in dem Verschlusselement mit Vorspannung in Anlage ist.

Zur Vermeidung von Reibverlusten kann der Federarm mit Linien- oder Punktberührung an dem Verschlusselement in Anlage sein, so dass die erforderliche Federkraft minimiert werden kann.

Eine einfache Herstellbarkeit und Montierbarkeit wird dadurch erreicht, dass die Dichtlippe an das Verschlusselement angespritzt ist, wobei sich eine zusätzliche Bauteilereduzierung ergibt, wenn Verschlusselement und Dichtlippe ein ZweiKomponenten-Kunststoffspritzgussteil ist.

Zum sicheren Einführen der Karte in die Aufnahmeöffnung kann das Verschlusselement auf seiner Einführseite eine Einführschräge aufweisen, die sich über die Breite der Aufnahmeöffnung erstreckt und in Einführrichtung der Karte zur Dichtlippe hin geneigt ist.

Um mit geringem Bauteile- und Bauraumerfordernis sowohl die Kartenfläche als auch die Kartenseitenkanten von Verunreinigungen zu befreien und auch bei teileingeführter Karte ein Eindringen von Verunreinigungen in das Innere der Kartenaufnahmevorrichtung zu verhindern, kann das Verschlusselement einen U-artigen Träger aufweisen, an dessen innerer Peripherie die Dichtlippe U-artig angeordnet ist.

Damit bei teileingeführter Karte die Seitenkanten sicher vollständig abgedichtet werden, können die freien Enden der Schenkel des U-artigen Trägers in der Schließstellung in entsprechende Ausnehmungen des Gehäuses versenkbar sein.

Damit von den Dichtlippen abgestreifte Feuchtigkeit nach außen gelangen kann, weist vorzugsweise das Gehäuse in Einführrichtung der Karte vor der Aufnahmeöffnung ein oder mehrere zum Gehäuseäußeren führende Entwässerungsöffnungen auf.

In Einführrichtung der Karte kann vor dem Gehäuse eine Frontblende angeordnet sein, die einen in einer Ebene der Aufnahmeöffung gegenüberliegenden Einführschacht gleicher Breite wie die Aufnahmeöffnung aufweist.

Ein Ausführungsbeispiel der Erfindung ist in der Zeichnung dargestellt und wird im Folgenden näher beschrieben. Es zeigen:
- Figur 1: einen Querschnitt eines Ausschnitts im Karteneinführbereich einer Kartenaufnahmevorrichtung im geschlossenen Zustand;

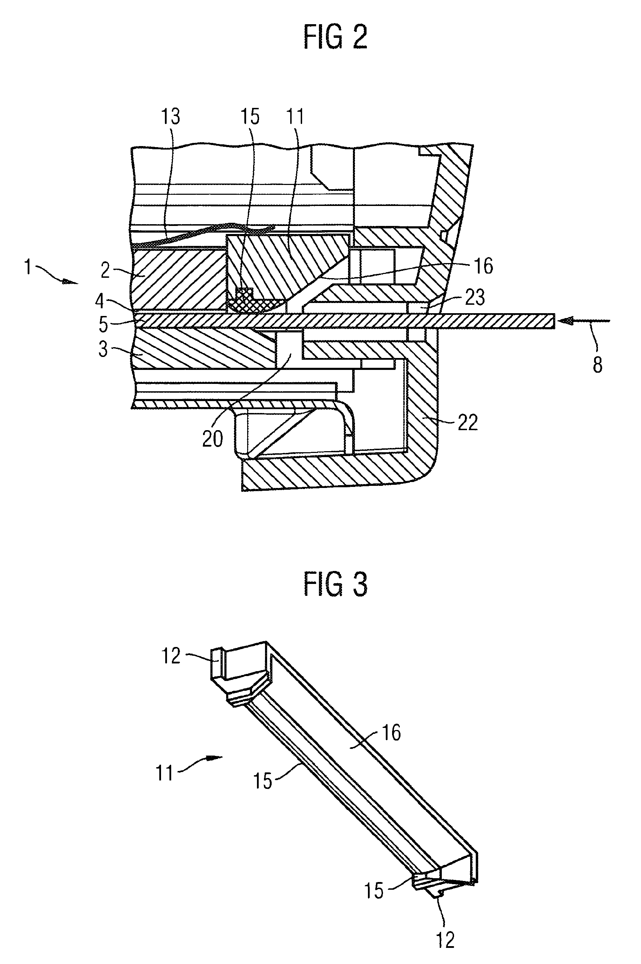

- Figur 2: den Ausschnitt nach Figur 1 mit einer teileingeführten Karte;
- Figur 3: ein Verschlusselement der Kartenaufnahmevorrichtung nach Figur 1 in perspektivischer Ansicht;

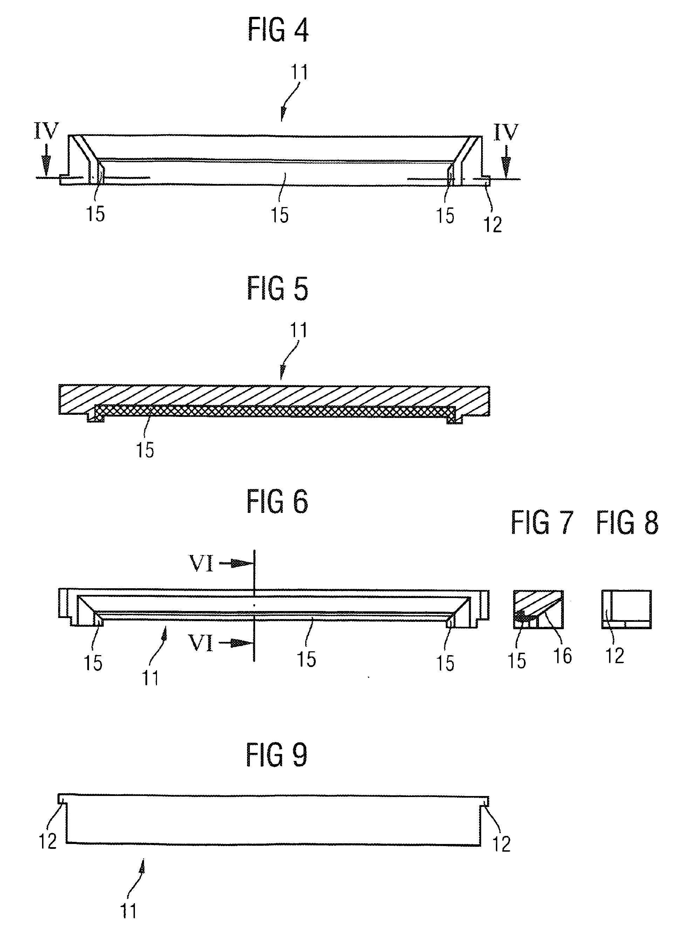

- Figur 4: das Verschlusselement nach Figur 3 in der Unteransicht;
- Figur 5: einen Schnitt des Verschlusselements nach Figur 3 entlang einer Linie IV - IV in Figur 4;
- Figur 6: das Verschlusselement nach Figur 3 in der Seitenansicht;
- Figur 7: einen Schnitt des Verschlusselements nach Figur 3 entlang einer Linie VI - VI in Figur 6;
- Figur 8: eine Stirnansicht des Verschlusselements nach Figur 3;
- Figur 9: das Verschlusselement nach Figur 3 in der Draufsicht;

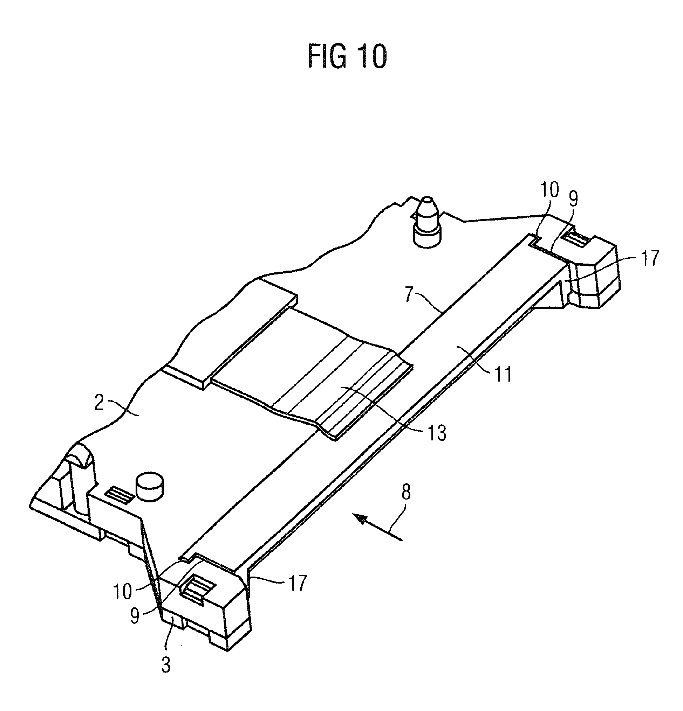

- Figur 10: eine perspektivische Draufsicht eines Ausschnitts im Karteneinführbereich von Gehäuse und Verschlusselement der Karteneinführvorrichtung nach Figur 1 im geschlossenen Zustand;

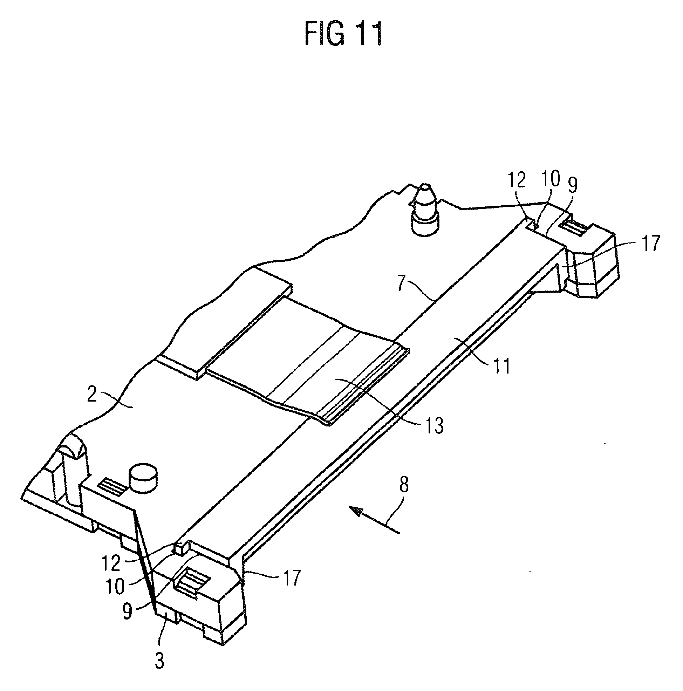

- Figur 11: eine perspektivische Draufsicht eines Ausschnitts im Karteneinführbereich von Gehäuse und Verschlusselement der Karteneinführvorrichtung nach Figur 1 im geöffneten Zustand;

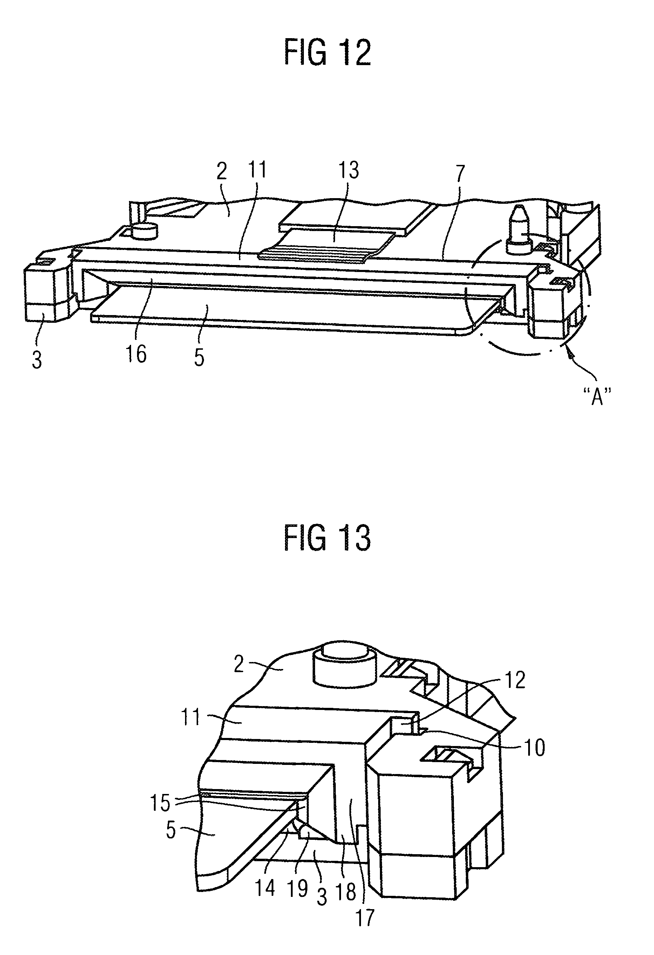

- Figur 12: eine perspektivische Frontansicht von Gehäuse und Verschlusselement der Karteneinführvorrichtung nach Figur 1 mit teileingeführter Karte;
- Figur 13: eine vergrößerte Darstellung des Ausschnitts "A" aus Figur 12;

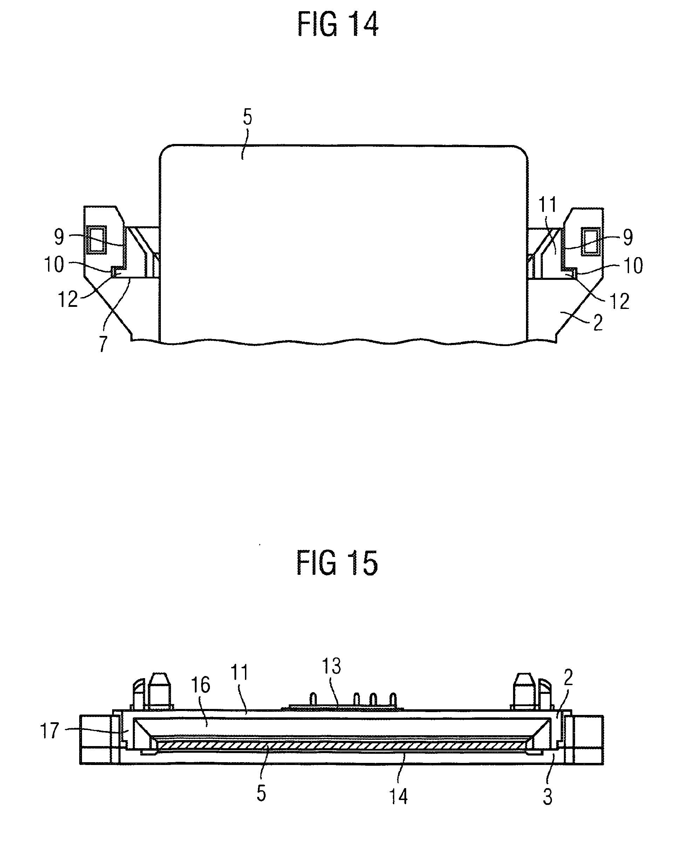

- Figur 14: eine Unteransicht eines Ausschnitts im Karteneinführbereich auf das Oberteil des Gehäuses und das Verschlusselement mit teileingeführter Karte und
- Figur 15: eine Frontansicht von Gehäuse und Verschlusselement der Karteneinführvorrichtung nach Figur 1 mit teileingeführter Karte.

Die dargestellte Kartenaufnahmevorrichtung weist ein Gehäuse 1 auf, das aus einem plattenartigen oberen Gehäuseteil 2 und einem plattenartigen unteren Gehäuseteil 2 besteht, die miteinander verbunden sind.

Zwischen dem oberen Gehäuseteil 2 und dem unteren Gehäuseteil 3 ist ein horizontaler Aufnahmespalt 4 zur Aufnahme einer als Chipkarte ausgebildeten Karte 5 gebildet.

Das einführseitige Ende des Aufnahmespalts 4 bildet eine spaltartige Aufnahmeöffnung 6 zum Einführen der Karte 5 von außen in den Aufnahmespalt 4.

Im Bereich der Aufnahmeöffnung 6 ist in dem oberen Gehäuseteil 2 eine sich quer zur Einführrichtung 8 der Karte 5 erstreckende Ausnehmung 7 rechteckigen Querschnitts quer zur Ebene des Aufnahmespalts 4 durchgehend ausgebildet. An den kurzen, in Einführrichtung 8 sich erstreckenden Seitenwänden 9 der Ausnehmung 7 ist jeweils eine Führungsnut 10 ausgebildet, die sich rechtwinklig zur Ebene des Aufnahmespalts 4 erstreckt.

In der Ausnehmung 7 ist ein Verschlusselement 11 entsprechend der Außenkontur rechtwinklig zur Ebene des Aufnahmespalts 4 verschiebbar geführt angeordnet, das an seinen seitlichen Enden einander entgegengesetzt hervorstehende und in die Führungsnuten 10 hineinragende Führungsansätze 12 aufweist.

Eine mit ihrem einen Ende an dem oberen Gehäuseteil 2 fest angeordnete Blattfeder 13 erstreckt sich in Einführrichtung 8 und liegt mit Vorspannung mit ihrem freien Endbereich mit Linienberührung auf der Oberseite des Verschlusselements 11 an und beaufschlagt dieses zur Anlage mit seinem unteren Bereich auf der durch das untere Gehäuseteil 3 gebildeten unteren wand 14 des Aufnahmespalts 4.

Das Verschlusselement 11 weist an seiner der Wand 14 zugewandten Seite entlang dem dem Gehäuseinneren zugewandten Ende eine sich über die Breite der Aufnahmeöffnung 6 erstreckende Dichtlippe 15 aus einem elastischen Kunststoff auf.

Verschlusselement 11 und Dichtlippe 15 sind als Zwei-Komponenten-Kunststoffspritzgussteil ausgebildet.

An seiner Einführseite weist das Verschlusselement 11 eine Einführschräge 16 auf, die sich über die Breite der Aufnahmeöffnung 6 erstreckt und in Einführrichtung 8 der Karte 5 zur Dichtlippe 15 hin geneigt ist.

Im Bereich der Dichtlippe 15 ist das Verschlusselement U-artig mit zur Wand 14 gerichteten Schenkeln 17 ausgebildet, wobei auch die Dichtlippe 15 mit ihren Enden entlang den Schenkeln 17 sich erstreckt, so dass sie ebenfalls U-artig ausgebildet ist.

Die freien Enden 18 der Schenkel 17 können bei Aufliegen der Dichtlippe 15 auf der Wand 14 in entsprechende Ausnehmungen 19 in dem unteren Gehäuseteil 3 eintauchen.

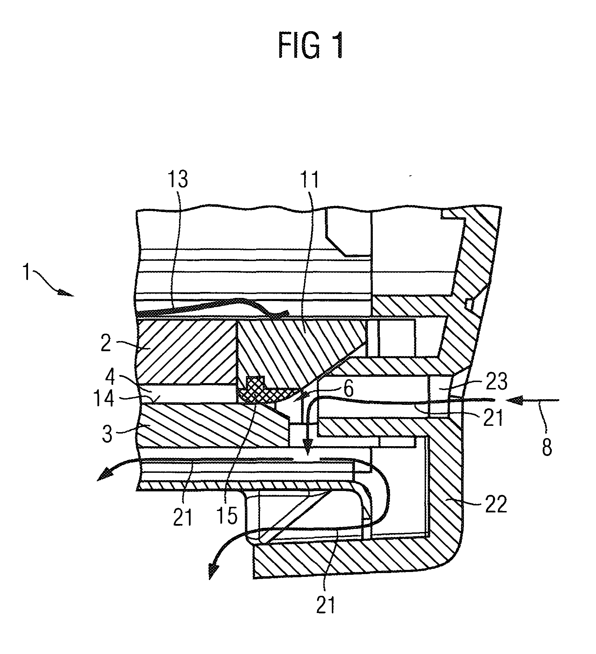

In Einführrichtung 8 vor dem unteren Gehäuseteil 3 und damit vor der Aufnahmeöffnung 6 ist eine Entwässerungsöffnung 20 ausgebildet, durch die entsprechend den in Figur 1 eingezeichneten Pfeilen 21 Feuchtigkeit nach außen abgeführt werden kann.

In Einführrichtung 8 der Karte 5 vor dem Gehäuse 1 ist eine mit dem Gehäuse verbundene Frontblende 22 angeordnet, die einen in einer Ebene der Aufnahmeöffnung 6 gegenüberliegenden Einführschacht 23 gleicher Breite wie die Aufnahmeöffnung 6 aufweist.

## Patentansprüche

1. Kartenaufnahmevorrichtung insbesondere für einen Fahrtenschreiber in einem Kraftfahrzeug, mit einem Gehäuse, das eine horizontale, spaltartige Aufnahmeöffnung zum Einführen einer Karte, insbesondere einer Chipkarte in einen Aufnahmespalt im Inneren der Kartenaufnahmevorrichtung aufweist, sowie mit einem Verschluss zum Verschließen der Aufnahmeöffnung, wobei der Verschluss ein Verschlusselement mit einer Dichtung aufweist, das sich in Längsrichtung der Aufnahmeöffnung erstreckt und entgegen einer Federkraft aus einer die Aufnahmeöffnung abdeckenden Schließposition rechtwinklig zur Ebene des Aufnahmespalts in eine die Aufnahmeöffnung freigebende Freigabeposition bewegbar ist, **dadurch ge - kennzeichnet**, dass das Verschlusselement (11) in einer Führung des Gehäuses (1) rechtwinklig zur Ebene des Aufnahmespalts (4) aus der Schließposition in die Freigabeposition anhebbar geführt ist und mit einer sich über die Länge der Aufnahmeöffnung (6) erstreckenden Dichtlippe (15) aus einem elastischen Kunststoff versehen ist, die in der Schließposition an einer unteren Spaltwand (14) des Aufnahmespaltes (4) in Anlage ist und wobei das Verschlusselement (11) an seinen seitlichen Enden einander entgegengesetzt hervorstehende Führungsansätze (12) aufweist, die in rechtwinklig zur Ebene des Aufnahmespalts (4) sich erstreckende Führungsnuten (10) des Gehäuses (1) hineinragen.

2. Kartenaufnahmevorrichtung nach Anspruch 1, **dadurch gekennzeichnet, dass** das Verschlusselement (11) von einer Feder in die Schließposition beaufschlagt ist, die mit ihrem einen Ende an dem Gehäuse (1) abgestützt und mit ihrem anderen Ende an der der Dichtlippe (15) abgewandten Seite des Verschlusselements (11) mit Vorspannung in Anlage ist.

3. Kartenaufnahmevorrichtung nach Anspruch 2, **dadurch gekennzeichnet, dass** die Feder ein Federarm, insbesondere eine Blattfeder (13) ist, der mit seinem einen Endbereich an dem Gehäuse (1) befestigt und mit seinem anderen Endbereich an dem Verschlusselement (11) mit Vorspannung in Anlage ist.

4. Kartenaufnahmevorrichtung nach Anspruch 3, **dadurch gekennzeichnet, dass** der Federarm mit Linien- oder Punktberührung an dem Verschlusselement (11) in Anlage ist.

5. Kartenaufnahmevorrichtung nach einem der vorhergehenden Ansprüche, **dadurch gekennzeichnet, dass** die Dichtlippe (15) an das Verschlusselement (11) angespritzt ist.

6. Kartenaufnahmevorrichtung nach Anspruch 5, **dadurch gekennzeichnet, dass** Verschlusselement (11) und Dichtlippe (15) ein Zwei-Komponenten-Kunststoffspritzgussteil ist.

7. Kartenaufnahmevorrichtung nach einem der vorhergehenden Ansprüche, **dadurch gekennzeichnet, dass** das Verschlusselement (11) auf seiner Einführseite eine Einführschräge (16) aufweist, die sich über die Breite der Aufnahmeöffnung (6) erstreckt und in Einführrichtung (8) der Karte (5) zur Dichtlippe (15) hin geneigt ist.

8. Kartenaufnahmevorrichtung nach einem der vorhergehenden Ansprüche, **dadurch gekennzeichnet, dass** das Verschlusselement (11) einen U-artigen Träger aufweist, an dessen innerer Peripherie die Dichtlippe (15) U-artig angeordnet ist.

9. Kartenaufnahmevorrichtung nach Anspruch 8, d a**durch gekennzeichnet,** dass die freien Enden (18) der Schenkel (17) des U-artigen Trägers in der Schließstellung in entsprechende Ausnehmungen (19) des Gehäuses (1) versenkbar sind.

10. Kartenaufnahmevorrichtung nach einem der vorhergehenden Ansprüche, **dadurch gekennzeichnet, dass** das Gehäuse (1) in Einführrichtung (8) der Karte (5) vor der Aufnahmeöffnung (6) ein oder mehrere zum Gehäuseäußeren führende Entwässerungsöffnungen (20) aufweist.

11. Kartenaufnahmevorrichtung nach einem der vorhergehenden Ansprüche, **dadurch gekennzeichnet, dass** in Einführrichtung (8) der Karte (5) vor dem Gehäuse (1) eine Frontblende (22) angeordnet ist, die einen in einer Ebene der Aufnahmeöffnung (6) gegenüberliegenden Einführschacht (23) gleicher Breite wie die Aufnahmeöffnung (6) aufweist.

## Claims

1. Device for receiving a card, in particular for a tachograph in a motor vehicle, comprising a housing, which has a horizontal, slot-like receiving opening for inserting a card, in particular a chip card, in a receiving slot in the interior of the device for receiving a card, and comprising a closure for closing the receiving opening, the closure comprising a closure element with a seal, which extends in the longitudinal direction of the receiving opening and which may be moved counter to a spring force at right angles to the plane of the receiving slot from a closed position covering the receiving opening into an open position exposing the receiving opening, **characterized in that** the closure element (11) is guided in a liftable manner in a guide of the housing (1) at right angles to the plane of the receiving slot (4) from the closed position into the open position and is provided with a sealing lip (15) made of resilient plastics material extending over the length of the receiving opening (6), which in the closed position bears against a lower slot wall (14) of the receiving slot (4) and the closure element (11) having at its lateral ends guide projections (12) projecting in opposing directions, which project into guide grooves (10) of the housing (1) extending at right angles to the plane of the receiving slot (4).

2. Device for receiving a card according to Claim 1, **characterized in that** the closure element (11) is urged by a spring into the closed position which rests with its one end on the housing (1) and with its other end bears with pretensioning against the side of the closure element (11) remote from the sealing lip (15).

3. Device for receiving a card according to Claim 2, **characterized in that** the spring is a spring arm, in particular a leaf spring (13), which is fastened with its one end region to the housing (1) and with its other end region bears with pretensioning against the closure element (11).

4. Device for receiving a card according to Claim 3, **characterized in that** the spring arm bears against the closure element (11) with linear contact or point contact.

5. Device for receiving a card according to one of the preceding claims, **characterized in that** the sealing lip (15) is injection-molded onto the closure element (11).

6. Device for receiving a card according to Claim 5, **characterized in that** the closure element (11) and sealing lip (15) form a two-component plastics injection-molded part.

7. Device for receiving a card according to one of the preceding claims, **characterized in that** the closure element (11) has on its insertion side a lead-in chamfer (16), which extends over the width of the receiving opening (6) and is inclined in the direction of insertion (8) of the card (5) toward the sealing lip (15).

8. Device for receiving a card according to one of the preceding claims, **characterized in that** the closure element (11) has a U-shaped carrier, the sealing lip (15) being arranged in a U-shaped manner on the inner periphery thereof.

9. Device for receiving a card according to Claim 8, **characterized in that** the free ends (18) of the arms (17) of the U-shaped carrier in the closed position may be sunk into corresponding recesses (19) of the housing (1).

10. Device for receiving a card according to one of the preceding claims, **characterized in that** in the direction of insertion (8) of the card (5) the housing (1) has one or more moisture removal apertures (20) in front of the receiving opening (6), leading to the outside of the housing.

11. Device for receiving a card according to one of the preceding claims, **characterized in that** in the direction of insertion (8) of the card (5) a front cover (22) is arranged in front of the housing (1), which has an insertion slot (23) which opposes the receiving opening (6) in one plane, and which is of the same width as the receiving opening (6).

## Revendications

1. Dispositif (1) de réception d'une carte, notamment pour un tachygraphe dans un véhicule automobile, comprenant un boîtier qui a une ouverture horizontale de réception en forme de fente pour l'introduction d'une carte, notamment d'une carte à puces, dans une fente de réception à l'intérieur du dispositif de réception d'une carte, ainsi qu'une fermeture pour la fermeture de l'ouverture de réception, la fermeture comportant un élément de fermeture ayant un joint qui s'étend dans la direction longitudinale de l'ouverture de réception et qui est mobile à l'encontre d'une force de ressort d'une position de fermeture recouvrant l'ouverture de réception à une position de dégagement dégageant l'ouverture de réception à angle droit par rapport au plan de la fente de réception, **caractérisé en ce que** l'élément (11) de fermeture est guidé, avec possibilité d'être soulevé, dans un guidage du boîtier (1) à angle droit par rapport au plan de la fente (4) de réception, de la position de fermeture à la position de dégagement et est pourvu d'une lèvre (15) d'étanchéité en une matière plastique élastique, qui s'étend sur la longueur de l'ouverture (6) de réception et qui, en la position de fermeture, est en application sur une paroi (14) inférieure de la fente (4) de réception, et dans lequel l'élément (11) de fermeture a, sur ses extrémités latérales, des tenons (12) de guidage en saillie de manière opposée l'un à l'autre, qui pénètrent dans des mortaises (10) de guidage du boîtier (1) s'étendant à angle droit par rapport au plan de la fente (4) de réception.

2. Dispositif de réception d'une carte suivant la revendication 1, **caractérisé en ce que** l'élément (11) de fermeture est, dans la position de fermeture, soumis à l'action d'un ressort qui s'appuie par l'une de ses extrémités sur le boîtier (1) et qui vient s'appliquer avec précontrainte par son autre extrémité sur le côté, éloigné de la lèvre (15) d'étanchéité, de l'élément (11) de fermeture.

3. Dispositif de réception d'une carte suivant la revendication 2, **caractérisé en ce que** le ressort est un bras de ressort, notamment un ressort (13) à lame, qui est fixé par l'une de ses parties d'extrémités au boîtier (1) et qui s'applique avec précontrainte par son autre partie d'extrémité à l'élément (11) de fermeture.

4. Dispositif de réception d'une carte suivant la revendication 3, **caractérisé en ce que** le bras de ressort s'applique avec contact linéaire ou ponctuel à l'élément (11) de fermeture.

5. Dispositif de réception d'une carte suivant l'une des revendications précédentes, **caractérisé en ce que** la lèvre (15) d'étanchéité est injectée sur l'élément (11) de fermeture.

6. Dispositif de réception d'une carte suivant la revendication 5, **caractérisé en ce que** l'élément (11) de fermeture et la lèvre (15) d'étanchéité sont une pièce moulée par injection en matière plastique à deux composants.

7. Dispositif de réception d'une carte suivant l'une des revendications précédentes, **caractérisé en ce que** l'élément (11) de fermeture a, sur son côté d'introduction, un biseau (16) d'introduction, qui s'étend sur la largeur de l'ouverture (6) de réception et qui est incliné dans le sens (8) d'introduction de la carte (5) vers la lèvre (15) d'étanchéité.

8. Dispositif de réception d'une carte suivant l'une des revendications précédentes, **caractérisé en ce que** l'élément (11) de fermeture a un support de type en U, à la périphérie intérieure duquel la lèvre (15) d'étanchéité est disposée en U.

9. Dispositif de réception d'une carte suivant la revendication 8, **caractérisé en ce que** les extrémités (18) libres des branches (17) du support en U peuvent, dans la position de fermeture, être enfoncées dans des évidements (19) correspondants du boîtier (1).

10. Dispositif de réception d'une carte suivant l'une des revendications précédentes, **caractérisé en ce que** le boîtier (1) a, dans le sens (8) d'introduction de la carte (5), avant l'ouverture (6) de réception, une ouverture (20) ou plusieurs ouvertures (20) d'assèchement menant à l'extérieur du boîtier.

11. Dispositif de réception d'une carte suivant l'une des revendications précédentes, **caractérisé en ce qu'**il est monté, dans le sens (8) d'introduction de la carte (5) avant le boîtier (1), un écran (22) avant qui a un puits (23) d'introduction, en opposition dans un plan de l'ouverture (6) de réception et de même largeur que l'ouverture (6) de réception.
